# EUROPEAN PATENT APPLICATION

(11) **EP 2 278 420 A1**
(43) Date of publication of application: **26.01.2011**
(21) Application number: 10170809.7
(22) Date of filing: 26.07.2010
(51) Int. Cl.: G05B 17/02

(54) **Energy usage analysis in servo drive systems**

(30) Priority: 24.07.2009 US 228293 P
(71) Applicant: Rockwell Automation Technologies, Inc., Mayfield Heights, OH 44124 (US)
(72) Inventor: Pritchard, John, Cedarburg, WI 53012 (US); Durrant, John, Crewe, Cheshire CW3 0JB (GB)
(74) Representative: Grünecker, Kinkeldey, Stockmair & Schwanhäusser Anwaltssozietät

(57) **Abstract**

Systems and methods analyze energy consumption of a servo motor driven system during a conceptual design phase thereof. By breaking up loss of the servo motor driven system to its loss constituents, a designer tool is provided, which readily informs a user regarding losses that are created from a particular design.

## Description

### CLAIM OF PRIORITY UNDER 35 U.S.C. §119

This application claims the benefit of United States Provisional Patent Application No. 61/228,293, entitled ENERGY USAGE ANALYSIS IN SERVO DRIVE SYSTEMS, and filed on July 24th, 2009, the entirety of which is incorporated herein by reference.

### TECHNICAL FIELD

The claimed subject matter relates generally to industrial control systems and more particularly to analyzing energy consumption of a servo motor driven mechatronic system.

### BACKGROUND

Motion controllers are special-purpose computers utilized for controlling motors, drives, and other aspects of a mechatronic system. In general, mechatronics is the synergistic combination of Mechanical engineering, Electronic engineering, Computer engineering, Control engineering, and Systems Design engineering in order to design and manufacture industrial or control products. A mechatronics engineer unites the principles of mechanics, electronics, and computing to generate a simpler, more economical and reliable system. Mechatronics is often centered on mechanics, electronics, computing, control engineering, molecular engineering (from nanochemistry and biology), and optical engineering for example, which, combined, make possible the generation of simpler, more economical, reliable and versatile systems. An industrial robot is an example of a mechatronics system; it includes aspects of electronics, mechanics, and computing to perform its day-to-day job. Another example is a servo-drive system where some control element sends commands to a servo amplifier that in turn controls a motor or other electromechanical device such as an actuator.

In general, designing a system with drive technology and an associated mechatronic chain (e.g., combination of software/mechanical/control systems), can become a challenging task due to various dynamic parameters that continuously change in motion systems associated therewith. Additional difficulties relate to unknown or poorly defined parameters such as compliance and/or backlash between the load; the motor impact interaction; expected performance and the like. Moreover, additional complexities arise from the inherent complicated relationship between load, mechanism, servo motor, feedback, servo drive, controller and gain settings.

Typically, determining such efficiency and/or energy consumption often requires building a prototype machine and conducting empirical tests to collect data, and determine the proper combinations of machinery and configuration parameters. Another limited solution involves employing general simulation software such as computer simulation design systems. Nonetheless, such simulation systems do not identify losses with desired particularity. Moreover, complex product data is required, which is cumbersome to obtain and requires costly specialized services.

### SUMMARY

The following summary presents a simplified overview to provide a basic understanding of certain aspects described herein. This summary is not an extensive overview nor is it intended to identify critical elements or delineate the scope of the aspects described herein. The sole purpose of this summary is to present some features in a simplified form as a prelude to a more detailed description presented later.

Automated analysis of energy consumption during a conceptual design phase of a servo drive system (e.g., a mechatronic system) is provided by determining loss constituents that when combined create the loss associated with the servo drive system. Such loss constituents can be analyzed across various components of an electrical or mechanical system and can include: loss caused by standard mechanisms (such as loss induced by a belt drive, lead screw, chain drive, rack and the like); loss generated from transmission operation (such as loss induced from functions of timing belt, chain drive & spur gear); loss caused from performance of a gear box (such as loss induced from planetary gear boxes); loss generated from operation of servo motors (such as loss induced from thermal inefficiencies), for example. Accordingly, by classifying information related to cause of loss, and a break-up of such loss to individual contributors based on type/location of loss, a design tool is provided that readily informs a user regarding energy losses being created or generated from a particular design.

In a related aspect, an efficiency analysis can be performed by observing an entirety of a servo-motor system and ranking the loss constituents based on predetermined criteria (e.g., a designer/user of the mechatronic system). Such predetermined criteria can include: magnitude of the loss constituents, severity/frequency of the loss constituents, and the like, for example. In one aspect, for a given design, the constituent that creates the total loss can be summarized and described in form of a table or any readily discernable representation (e.g., a perceptible format such as a graphic representation). Accordingly, based on such loss depiction, a new design can be contemplated (e.g., if a transmission loss is substantially large, the transmission can be replaced with a direct connection and without a gearbox for a new design). Moreover, various combinations can then be evaluated, and such potential design candidates ranked according to energy efficiency, for example. In addition, various motion profiles can be evaluated to identify the most efficient design based on analyzing the entirety of the servo-motor system and determining the loss constituents or energy consumption. Hence, energy consumption can be optimized in the design phase based on the profile of loss constituents.

In a related aspect, a loss model can be supplied that determines each of the loss constituents. Such loss model for the motor, gear box, and linear stage mechanism can be database driven, wherein data is being pulled from a database (e.g., based on empirical data - as opposed to being entered manually). Such loss model can further be generated *via* a parsing component that can decompose or break up a loss for entirety of the servo motor system to its subparts or constituent values. The decomposition can be based on predetermined criteria as set by a user or designer of the mechatronic, for example.

According to a related methodology, initially the criteria desired by a user or designer of the servo motor drive system can be designated for the break up of losses. Such criteria can include identifying losses caused by standard mechanisms, transmission operations and the like. Subsequently, the loss can be broken to its loss constituents as indicated based on the criteria. Next, such loss constituents can be ranked as set by the user and subsequently displayed. Based on such display one can then evaluate design of the servo motor drive system.

To the accomplishment of the foregoing and related ends, the following description and annexed drawings set forth in detail certain illustrative aspects. These aspects are indicative of but a few of the various ways in which the principles described herein may be employed. Other advantages and novel features may become apparent from the following detailed description when considered in conjunction with the drawings.

### BRIEF DESCRIPTION OF THE DRAWINGS

**Fig. 1** illustrates an exemplary parsing component that can decompose or break up a loss, to its loss constituents/parts.

**Fig. 2** illustrates a block diagram for a system that analyzes energy consumption to determine its loss constituents.

**Fig. 3** is an alternative block diagram of an example analysis system.

**Fig. 4** is an example graphical user interface for analyzing mechatronic systems.

**Fig. 5** is a diagram illustrating example motion analyzer components.

**Fig. 6** is a diagram illustrating an example ranking component and interface.

**Fig. 7** illustrates an example process for analyzing energy consumption across a mechatronic system.

**Fig. 8** illustrates an exemplary environment for implementing various aspects of the simulation system for identifying losses.

**Fig. 9** further illustrates an exemplary environment that can employ determination of loss constituents and identifying losses.

### DETAILED DESCRIPTION

Systems and methods are provided for analyzing energy consumption across constituent components of a mechatronic system such as a servo-drive system and automatically optimizing the system in view of the analysis. In one aspect, a computer implemented system encoded with a computer program for design analysis of an industrial automation system is provided. The system includes a parsing component that determines loss constituents for a servo motor system and an analysis engine that evaluates energy consumption of the servo motor system based on the loss constituents. The loss constituents for example can include loss caused by standard mechanisms, loss generated from transmission operation, loss caused from performance of a gear box, loss generated from operation of servo motors, or a combination thereof.

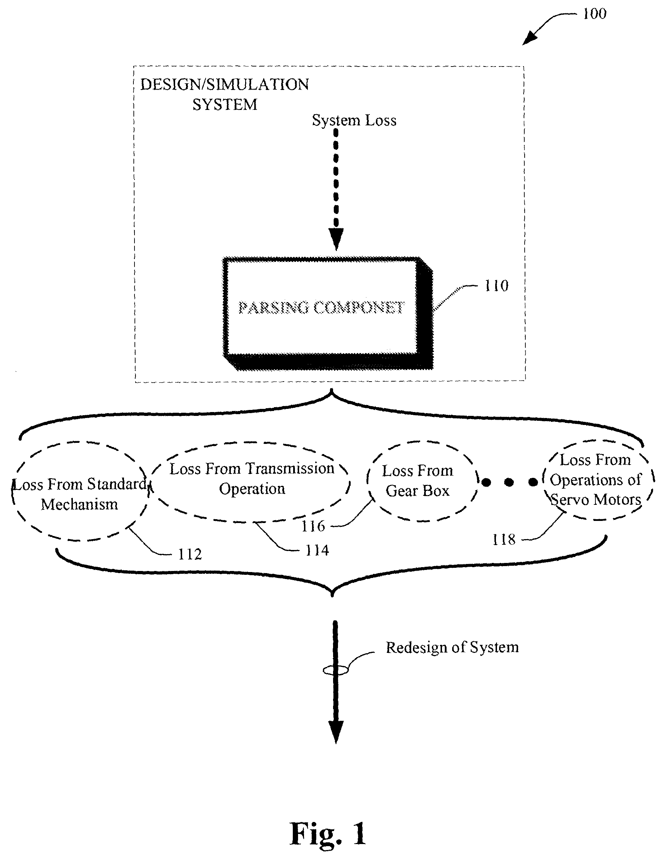

**Fig. 1** illustrates a design/simulation system 100 that identifies energy consumption during a conceptual design phase of a servo drive system (e.g., a mechatronic system), to determine associated losses based on the constituents that create such loss. A parsing component 110 can decompose or break up the loss to its constituents. Such loss constituents (1 thru n. n being an integer) can include: loss caused by standard mechanisms 112 (such as losses induced by belt drive, lead screw, chain drive, rack and the like); loss generated from transmission operation 114 (such as losses induced from functions of timing belt, chain drive & spur gear); loss caused from performance of a Gear box 116 (such as loss induced from planetary gear boxes); losses generated from operation of servo motors 118 (such as losses induced from thermal inefficiencies), for example. It is to be appreciated that other type of losses can be contemplated by the designer and are well within the realm of the subject innovation.

Before proceeding, it is noted that the parsing component 110 can include various combinations of local and/or remote processing of mechatronic and associated energy components. For instance, a local parsing component 110 could include an analysis engine that employs a parser to break data into smaller elements, according to a set of rules that describe its structure. Most data (mechatronic energy data and parameters) can be decomposed to some degree. This description can be expressed more formally as a grammar. A grammar is a set of rules that describe the structure, or syntax, of a particular type of data. Still yet another type of parser could operate remotely with a given database. For example, where a parser is a piece of software that evaluates the syntax of a script when it is executed on a web server. For scripting languages used on the web, the parser operates like a compiler might work in other types of application development environments. In the same way a compiler can create object code to be used on a computer from source code, a parser can turn scripted code into readable object code or display syntax errors found when the code is executed in a browser. Still yet another type of parser may be a generic parser that can recognize any type of data, not just XML, Mathematical expressions, and so forth. These usually operate by following rules specified in a BNF or EBNF grammar, for example. This grammar instructs the parser on how to read the data and create the tree.

It is noted that components associated with the industrial control or mechatronic system can include various computer or network components such as servers, clients, controllers, industrial controllers, programmable logic controllers (PLCs), energy monitors, batch controllers or servers, distributed control systems (DCS), communications modules, mobile computers, wireless components, control components and so forth that are capable of interacting across a network. Similarly, the term controller or PLC as used herein can include functionality that can be shared across multiple components, systems, or networks. For example, one or more controllers can communicate and cooperate with various network devices across the network. This can include substantially any type of control, communications module, computer, I/O device, sensors, Human Machine Interface (HMI) that communicate *via* the network that includes control, automation, or public networks. The controller can also communicate to and control various other devices such as Input/Output modules including Analog, Digital, Programmed/Intelligent I/O modules, other programmable controllers, communications modules, sensors, output devices, and the like. All these components can be empirically or mathematically analyzed to determine their energy contributions to the overall mechatronic system.

The network can include public networks such as the Internet, Intranets, and automation networks such as Control and Information Protocol (CIP) networks including DeviceNet and ControlNet. Other networks include Ethernet, DH/DH+, Remote I/O, Fieldbus, Modbus, Profibus, wireless networks, serial protocols, and so forth. In addition, the network devices can include various possibilities (hardware or software components). These include components such as switches with virtual local area network (VLAN) capability, LANs, WANs, proxies, gateways, routers, firewalls, virtual private network (VPN) devices, servers, clients, computers, configuration tools, monitoring tools, or other devices.

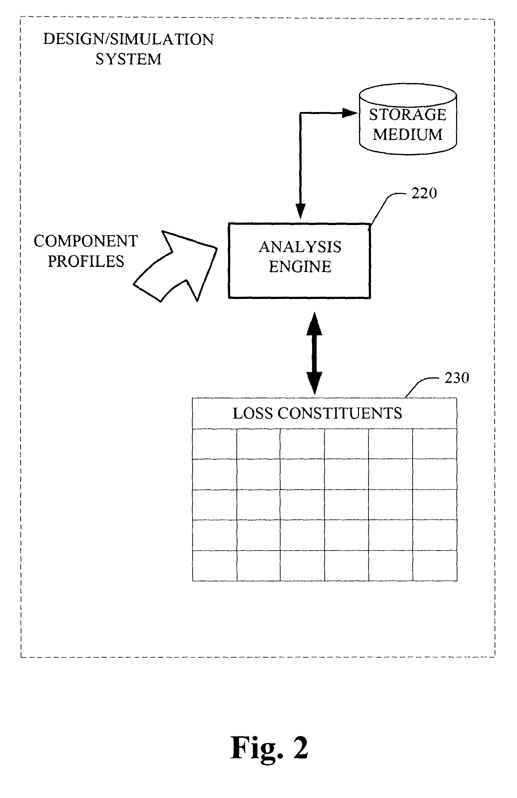

Turning now to **Fig. 2****,** an analysis engine 220 determines or analyzes energy consumption during a conceptual design phase of a servo drive system (e.g., a mechatronic system) - by determining loss constituents that when combined create the loss associated with the servo drive system. Such analysis engine 220 can perform an efficiency analysis by observing an entirety of the servo-motor system and ranking the loss constituents based on a predetermined criteria (e.g., a designer/user of the mechatronic system). Such predetermined criteria can include: magnitude of the loss constituents, severity/frequency of the loss constituents, and the like, for example. In one aspect, for a given design, the constituent that cause the loss can be summarized and described in form of a table 230 or any readily discernable representation (e.g., a perceptible format such as a graphic representation.)

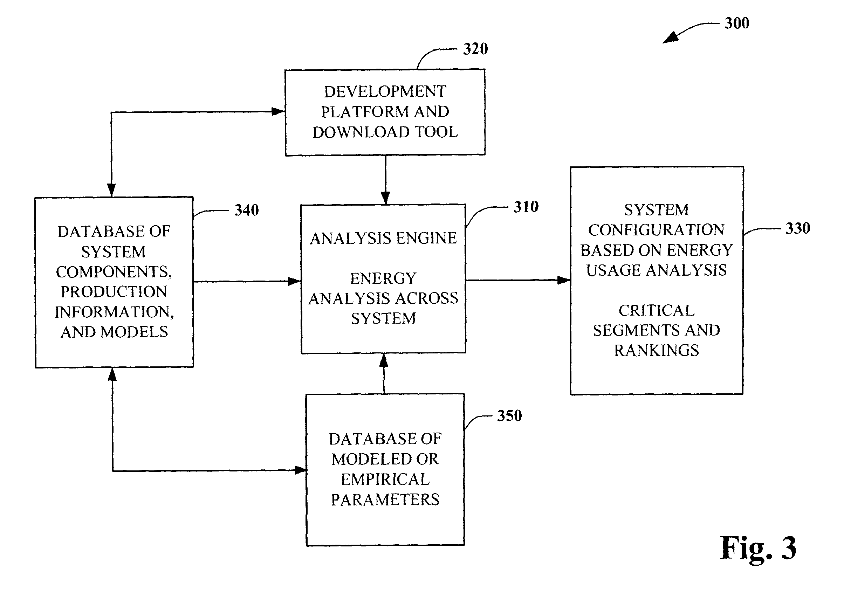

**Fig. 3** illustrates an example analysis system 300. The system 300 includes an analysis engine 310 for analyzing mechatronic energy usage across components of a mechatronic system. The analysis engine 310 can receive modeling instructions at a user interface 320 and also output system results to the interface. For example, alternative system configurations may be output at 310 that lead a designer to construct the most energy efficient system. Such output at 330 may also include rankings and critical segment identifications where energy usage can be optimized or conserved. As shown, the analysis engine 310 processes a database 340 of system components, product information, and energy models, for example. Another database 350 includes modeled or empirical system parameters. In general, the system 300 determines energy losses across system components and identifies energy alternatives across the respective system components. For example, generating suggested system configurations at 330 based on alternative energy analysis or energy loss. This includes optimizing across a subset of system components or across the system as a whole. The analysis can include beginning to end work flows across the entire mechatronic system. This includes identifying critical segments for energy consumption. Such segments can also be ranked in terms of energy loss or efficiency, for example.

In one aspect, the system 300 facilitates automated analysis of energy consumption during a conceptual design phase of a servo drive system (e.g., a mechatronic system) by determining loss constituents that when combined create the loss associated with the servo drive system. Such loss constituents can be analyzed across various components of an electrical or mechanical system and can include: loss caused by standard mechanisms (such as loss induced by a belt drive, lead screw, chain drive, rack and the like); loss generated from transmission operation (such as loss induced from functions of timing belt, chain drive & spur gear); loss caused from performance of a gear box (such as loss induced from planetary gear boxes); loss generated from operation of servo motors (such as loss induced from thermal inefficiencies), for example. Accordingly, by classifying information related to cause of loss, and a break-up of such loss to individual contributors based on type/location of loss, a design tool is provided that readily informs a user regarding energy losses being created or generated from a particular design.

In a related aspect, the analysis engine can include an efficiency analysis that can be performed by observing an entirety of a servo-motor system and ranking the loss constituents at 330 based on predetermined criteria (e.g., a designer/user of the mechatronic system). Such predetermined criteria can include: magnitude of the loss constituents, severity/frequency of the loss constituents, and the like, for example. In one aspect, for a given design, the constituent that creates the total loss can be summarized and described in form of a table or any readily discernable representation (e.g., a perceptible format such as a graphic representation). Accordingly, based on such loss depiction, a new design can be contemplated (e.g., if a transmission loss is substantially large, the transmission can be replaced with a direct connection and without a gearbox for a new design). Moreover, various combinations can then be evaluated, and such potential design candidates ranked according to energy efficiency, for example. In addition, various motion profiles can be evaluated to identify the most efficient design based on analyzing the entirety of the servo-motor system and determining the loss constituents or energy consumption. Hence, energy consumption can be optimized in the design phase based on the profile of loss constituents.

In a related aspect, a loss model can be supplied that determines each of the loss constituents. Such loss model for the motor, gear box, and linear stage mechanism can be database driven, wherein data is being pulled from a database (e.g., based on empirical data - as opposed to being entered manually). Such loss model can further be generated *via* a parsing component that can decompose or break up a loss for entirety of the servo motor system to its subparts or constituent values. The decomposition can be based on predetermined criteria as set by a user or designer of the mechatronic, for example.

According to a related methodology, initially the criteria desired by a user or designer of the servo motor drive system can be designated for the break up of losses. Such criteria can include identifying losses caused by standard mechanisms, transmission operations and the like. Subsequently, the loss can be broken to its loss constituents as indicated based on the criteria. Next, such loss constituents can be ranked as set by the user and subsequently displayed. Based on such display one can then evaluate design of the servo motor drive system.

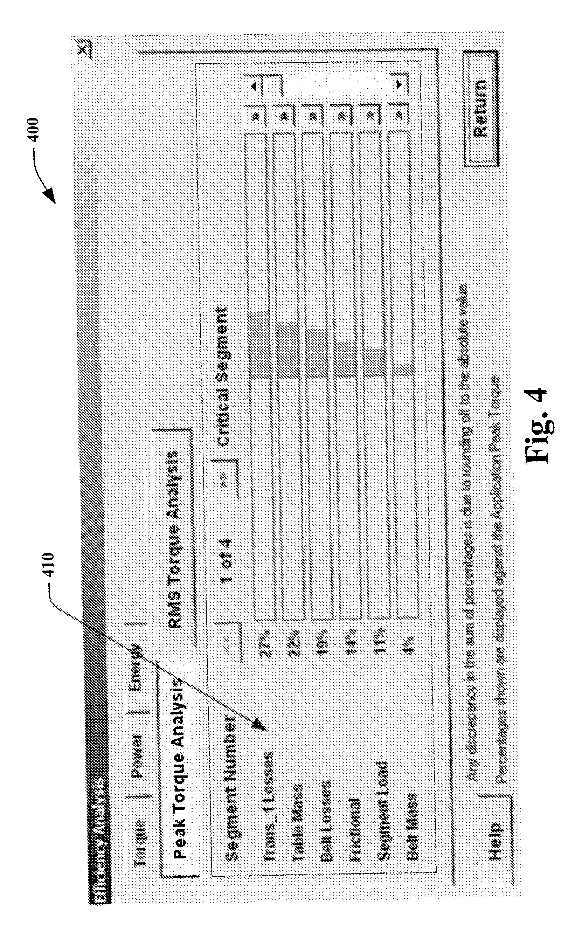

**Fig. 4** is an example graphical user interface 400 for analyzing mechatronic systems. The interface 400 operates in accordance with the analysis systems described above to address such issues as: Where is the produced energy being consumed? If one desires to make a mechatronic system more efficient, where is the best place to start? If one alters an aspect of a design, what is the impact on energy consumption? In general, the problem is due to the complex relationship between the load and the efficiencies of the mechanism, transmissions, servo motor and servo drive. The system and methods described herein provides a means to analyze & rank energy usage in every component of a mechatronic servo driven system during the conceptual design phase, and facilitates more efficient design outcomes. For example, the interface 400 outputs data relating to energy consumption of a critical segment of a mechatronic system. As shown at 410, example analysis data include transmission losses, inertias including motor inertia and motor losses, as well as segment load information. As can be appreciated, other energy or loss data can be generated and output to the interface 400.

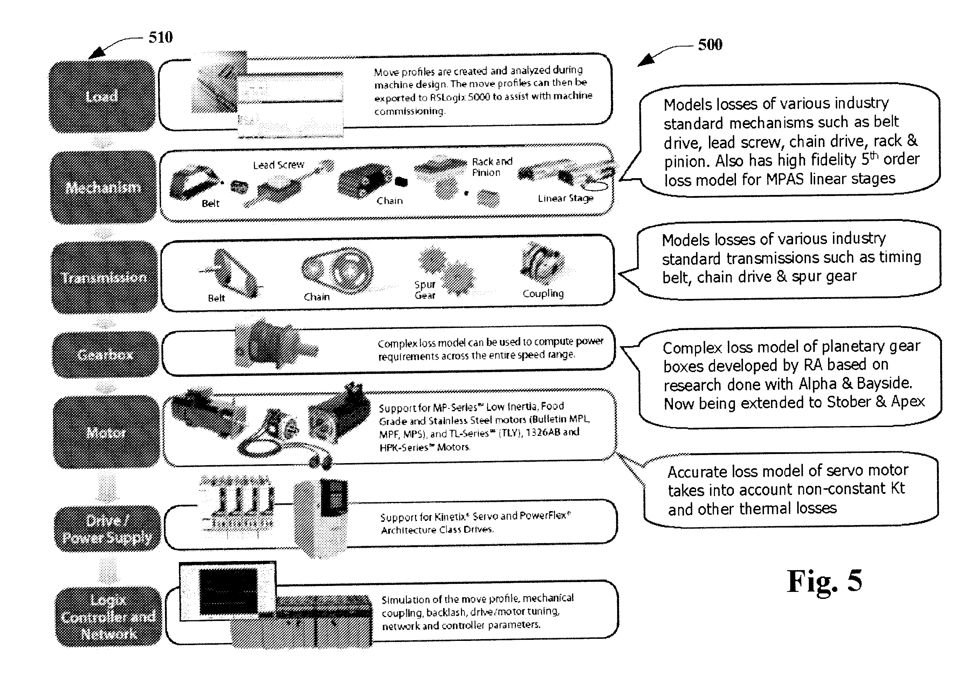

**Fig. 5** is a diagram illustrating example motion analyzer components 500. At 510, some example aspects that can be analyzed include loads, mechanisms, transmissions, gearboxes, motors, drives, power supplies, controllers/related equipment, and so forth. Such components can be analyzed in accordance with models associated with losses of various industry standard mechanisms such as belt drive, lead screw, chain drive, rack & pinion, anmd so forth. This can include high fidelity multi order loss models for linear stages. Model losses of various industry standard transmissions can include timing belts, chain drives & spur gears, for example. Complex loss models of planetary gear boxes can be provided. Accurate loss models of servo motor takes into account non-constant Kt and other thermal losses.

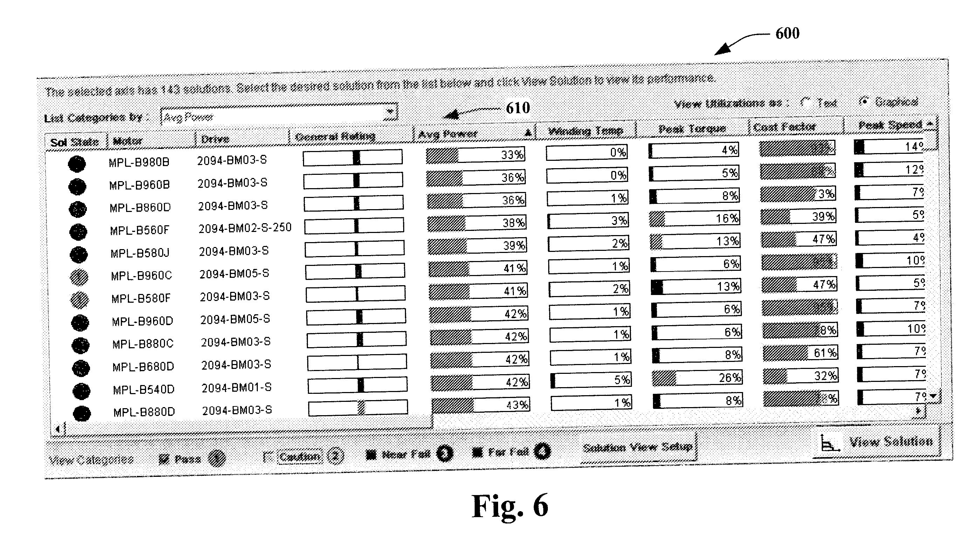

**Fig. 6** is a diagram illustrating an example ranking component and interface 600. This interface 600 and method provides a means to analyze & rank multiple servo motor drive pairings by energy and/or power usage during the conceptual design phase, and facilitates more efficient design outcomes. As shown at 610 for example, motor drive combinations can be ranked according to cost, speed, torque, winding temperature, current consumption, inertia ratios, average currents, peak currents and so forth. As can be appreciated, a plurality of other components and parameters can be similarly analyzed.

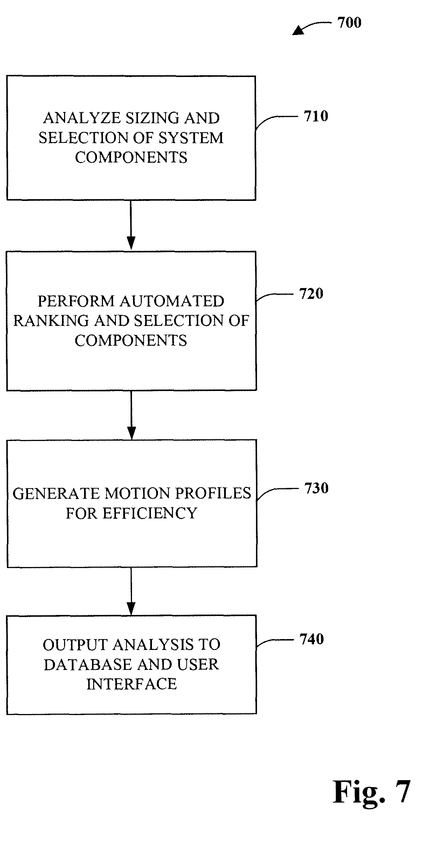

**Fig. 7** illustrates an example process 700 for analyzing energy consumption across a mechatronic system. While, for purposes of simplicity of explanation, the methodology is shown and described as a series of acts, it is to be understood and appreciated that the methodologies are not limited by the order of acts, as some acts may occur in different orders or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology as described herein.

At 710, the process 700 analyzes sizing and selection of system components. This includes providing an energy usage analysis tool that is used during the sizing & selection of a servo driven mechanism. The tool provides information on where energy is being 'consumed' by each component in a mechatronic system, and provides the information ranked by the highest first. As such, it enables designers to make fact based design changes to address energy usage reduction. This also includes a method for analysis of energy usage of components in a servo driven mechatronic system to facilitate design changes that reduce energy consumption. This will reduce energy usage by mechatronic components and, as such, the system could be speeded up to a point where energy usage is the same again (in other words, one could choose to either save energy or increase throughput).

At 720, perform automated ranking and selection of components. This ranking will allow a list of all potential solutions, including a mix of those that require a gearbox, and will allow the list to be ranked by power consumption. The value for power consumption will be non-trivial, and can be based on modeling of the load, mechanical mechanism including losses, transmission, gearbox, motor and drive. During the search process for a suitable motor/drive system there often many potential solutions. The ranking and selection provides a technique for ranking the solutions based on energy consumption, and ultimately selecting the best energy performing combination.

At 730, one or more motion profiles are generated. The moving parts of an automated machine typically consist of a complex combination of load, mechanical mechanisms, transmissions, motor, drive & control. In many cases, the exact velocity profile of how these parts move is arbitrary, with the constraint simply being that part X needs to move from point A to point B in a given time. In these cases, the process 700 allows for the automatic generation of a velocity profile that not only met the criteria for where part X needed to be, but also consumed the least energy. This could either be 'off-line' during the design phase, or 'on-line' during machine operation. This includes a method to optimize a motion profile for maximum energy efficiency and models the full mechatronic system to arrive at the result. It can be iterative, adaptive & dynamic. At 740, automated analysis are output to a database and/or user interface to facilitate optimal configuration and selection of mechatronic system components.

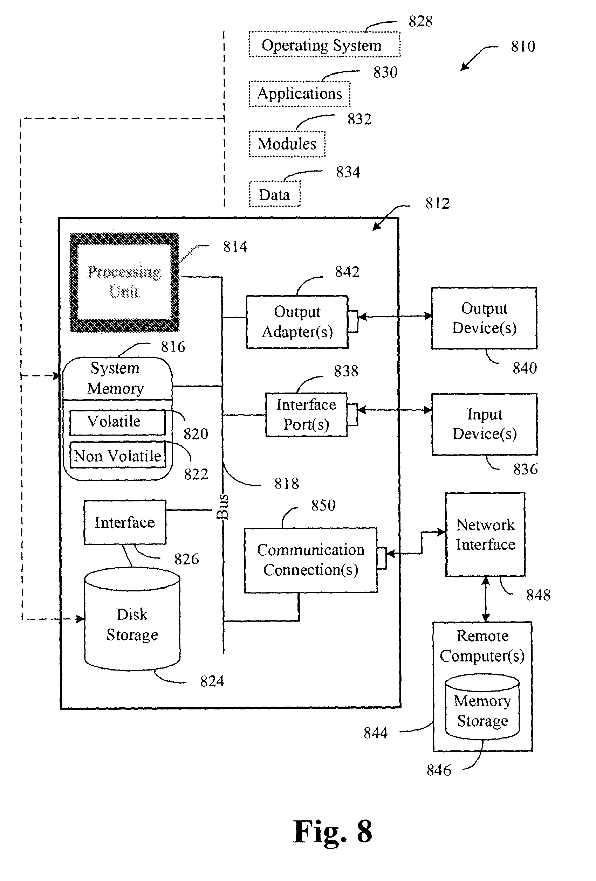

**Fig. 8** illustrates an exemplary environment 810 for implementing various aspects of the simulation system and determination of loss constituents, which can include computer 812, in accordance with an aspect of the subject innovation. The computer 812 includes a processing unit 814, a system memory 816, and a system bus 818. The system bus 818 couples system components including, but not limited to, the system memory 816 to the processing unit 814. The processing unit 814 can be any of various available processors. Dual microprocessors and other multiprocessor architectures also can be employed as the processing unit 814.

The system bus 818 can be any of several types of bus structure(s) including the memory bus or memory controller, a peripheral bus or external bus, and/or a local bus using any variety of available bus architectures including, but not limited to, 9-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 816 includes volatile memory 820 and nonvolatile memory 822. The basic input/output system (BIOS), containing the basic routines to transfer information between elements within the computer 812, such as during start-up, is stored in nonvolatile memory 822. By way of illustration, and not limitation, nonvolatile memory 822 can include read only memory (ROM), programmable ROM (PROM), electrically programmable ROM (EPROM), electrically erasable ROM (EEPROM), or flash memory. Volatile memory 820 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 812 also includes removable/non-removable, volatile/non-volatile computer storage media. Fig. 8 illustrates, for example a disk storage 824. Disk storage 824 includes, but is not limited to, devices like a magnetic disk drive, floppy disk drive, tape drive, Jaz drive, Zip drive, LS-60 drive, flash memory card, or memory stick. In addition, disk storage 824 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 824 to the system bus 818, a removable or non-removable interface is typically used such as interface 826.

It is to be appreciated that Fig. 8 describes software that acts as an intermediary between users and the basic computer resources described in suitable operating environment 810. Such software includes an operating system 828. Operating system 828, which can be stored on disk storage 824, acts to control and allocate resources of the computer system 812. System applications 830 take advantage of the management of resources by operating system 828 through program modules 832 and program data 834 stored either in system memory 816 or on disk storage 824. It is to be appreciated that various components described herein can be implemented with various operating systems or combinations of operating systems.

A user enters commands or information into the computer 812 through input device(s) 836. Input devices 836 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 814 through the system bus 818 *via* interface port(s) 838. Interface port(s) 838 include, for example, a serial port, a parallel port, a game port, and a universal serial bus (USB). Output device(s) 840 use some of the same type of ports as input device(s) 836. Thus, for example, a USB port may be used to provide input to computer 812, and to output information from computer 812 to an output device 840. Output adapter 842 is provided to illustrate that there are some output devices 840 like monitors, speakers, and printers, among other output devices 840 that require special adapters. The output adapters 842 include, by way of illustration and not limitation, video and sound cards that provide a means of connection between the output device 840 and the system bus 818. It should be noted that other devices and/or systems of devices provide both input and output capabilities such as remote computer(s) 844.

Computer 812 can operate in a networked environment using logical connections to one or more remote computers, such as remote computer(s) 844. The remote computer(s) 844 can be a personal computer, a server, a router, a network PC, a workstation, a microprocessor based appliance, a peer device or other common network node and the like, and typically includes many or all of the elements described relative to computer 812. For purposes of brevity, only a memory storage device 846 is illustrated with remote computer(s) 844. Remote computer(s) 844 is logically connected to computer 812 through a network interface 848 and then physically connected *via* communication connection 850. Network interface 848 encompasses communication networks such as local-area networks (LAN) and wide-area networks (WAN). LAN technologies include Fiber Distributed Data Interface (FDDI), Copper Distributed Data Interface (CDDI), Ethernet/IEEE 802.3, Token Ring/IEEE 802.5 and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 850 refers to the hardware/software employed to connect the network interface 848 to the bus 818. While communication connection 850 is shown for illustrative clarity inside computer 812, it can also be external to computer 812. The hardware/software necessary for connection to the network interface 848 includes, for exemplary purposes only, internal and external technologies such as, modems including regular telephone grade modems, cable modems and DSL modems, ISDN adapters, and Ethernet cards.

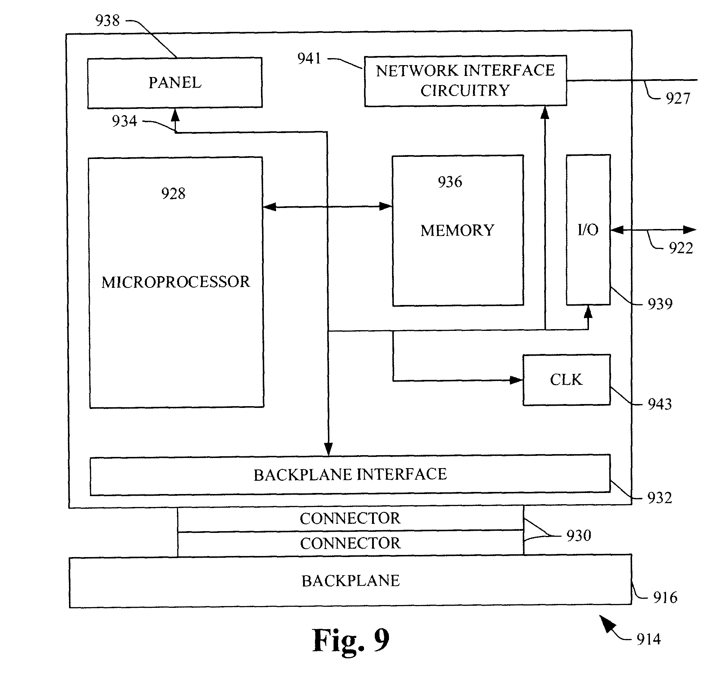

**Fig. 9** also illustrates an exemplary environment that can employ design of servo motor system, in accordance with an aspect of the subject innovation. Each functional module 914 is attached to the backplane 916 by means of a separable electrical connector 930 that permits the removal of the module 914 from the backplane 916 so that it may be replaced or repaired without disturbing the other modules 914. The backplane 916 provides the module 914 with both power and a communication channel to the other modules 914. Local communication with the other modules 914 through the backplane 916 is accomplished by means of a backplane interface 932 which electrically connects the backplane 916 through connector 930. The backplane interface 932 monitors messages on the backplane 916 to identify those messages intended for the particular module 914, based on a message address being part of the message and indicating the message destination. Messages received by the backplane interface 932 are conveyed to an internal bus 934 in the module 914.

The internal bus 934 joins the backplane interface 932 with a memory 936, a microprocessor 928, front panel circuitry 938, I/O interface circuitry 939 and communication network interface circuitry 941. The microprocessor 928 can be a general purpose microprocessor providing for the sequential execution of instructions included within the memory 936 and the reading and writing of data to and from the memory 936 and the other devices associated with the internal bus 934. The microprocessor 928 includes an internal clock circuit (not shown) providing the timing of the microprocessor 928 but may also communicate with an external clock 943 of improved precision. This clock 943 may be a crystal controlled oscillator or other time standard including a radio link to an external time standard. The precision of the clock 943 may be recorded in the memory 936 as a quality factor. The panel circuitry 938 includes status indication lights such as are well known in the art and manually operable switches such as for locking the module 914 in the off state.

The memory 936 can comprise control programs or routines executed by the microprocessor 928 to provide control functions, as well as variables and data necessary for the execution of those programs or routines. For I/O modules, the memory 936 may also include an I/O table holding the current state of inputs and outputs received from and transmitted to the industrial controller 910 *via* the I/O modules 920.

In a related aspect, an inference component (e.g., an artificial intelligence component) can be employed to facilitate determination of the loss constituents. As used herein, the term "inference" refers generally to the process of reasoning about or inferring states of the system, environment, and/or user from a set of observations as captured *via* events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

For example, a process for determining when and how to identify the loss constituents can be facilitated *via* an automatic classifier system and process. A classifier is a function that maps an input attribute vector, x = (x1, x2, x3, x4, *xn*), to a confidence that the input belongs to a class, that is, f(x) *= confidence*(*class*)*.* Such classification can employ a probabilistic and/or statistical-based analysis (*e.g*., factoring into the analysis utilities and costs) to prognose or infer an action that a user desires to be automatically performed.

A support vector machine (SVM) is an example of a classifier that can be employed. The SVM operates by finding a hypersurface in the space of possible inputs, which hypersurface attempts to split the triggering criteria from the non-triggering events. Intuitively, this makes the classification correct for testing data that is near, but not identical to training data. Other directed and undirected model classification approaches include, *e.g*., naive Bayes, Bayesian networks, decision trees, neural networks, fuzzy logic models, and probabilistic classification models providing different patterns of independence can be employed. Classification as used herein also is inclusive of statistical regression that is utilized to develop models of priority.

As will be readily appreciated from the subject specification, the subject innovation can employ classifiers that are explicitly trained (*e.g., via* a generic training data) as well as implicitly trained (*e*.*g*., *via* observing user behavior, receiving extrinsic information). For example, SVM's are configured *via* a learning or training phase within a classifier constructor and feature selection module. Thus, the classifier(s) can be used to automatically learn and perform a number of functions, including but not limited to determining according to a predetermined criteria when to update or refine the previously inferred schema, tighten the criteria on the inferring algorithm based upon the kind of data being processed (*e.g*., rotational, linear).

It is noted that as used in this application, terms such as "component", "engine", and the like are intended to refer to electro-mechanical systems, or a computer-related entity, either hardware, a combination of hardware and software, software, or software in execution as applied to an automation system for industrial control. For example, a component may be, but is not limited to being, a process running on a processor, a processor, an object, an executable, a thread of execution, a program and a computer. By way of illustration, both an application running on a server and the server can be components. One or more components may reside within a process and/or thread of execution and a component may be localized on one computer and/or distributed between two or more computers, industrial controllers, and/or modules communicating therewith. Additionally, it is noted that as used in this application, terms such as "system user," "user," "operator" and the like are intended to refer to the person operating the computer-related entity referenced above.

It is also noted that the interfaces described herein can include a Graphical User Interface (GUI) to interact with the various components for providing industrial control information to users. This can include substantially any type of application that sends, retrieves, processes, and/or manipulates factory input data, receives, displays, formats, and/or communicates output data, and/or facilitates operation of the enterprise. For example, such interfaces can also be associated with an engine, editor tool or web browser although other type applications can be utilized. The GUI can include a display having one or more display objects including such aspects as configurable icons, buttons, sliders, input boxes, selection options, menus, tabs and so forth having multiple configurable dimensions, shapes, colors, text, data and sounds to facilitate operations with the interfaces. In addition, the GUI can also include a plurality of other inputs or controls for adjusting and configuring one or more aspects. This can include receiving user commands from a mouse, keyboard, speech input, web site, remote web service and/or other device such as a camera or video input to affect or modify operations of the GUI. Additionally, it is also noted that the term industrial controller as used herein includes both PLCs and process controllers from distributed control systems and can include functionality that can be shared across multiple components, systems, and or networks.

The word "exemplary" is used herein to mean serving as an example, instance, or illustration. For the avoidance of doubt, the subject matter disclosed herein is not limited by such examples. In addition, any aspect or design described herein as "exemplary" is not necessarily to be construed as preferred or advantageous over other aspects or designs, nor is it meant to preclude equivalent exemplary structures and techniques known to those of ordinary skill in the art. Furthermore, to the extent that the terms "includes," "has," "contains," and other similar words are used in either the detailed description or the claims, for the avoidance of doubt, such terms are intended to be inclusive in a manner similar to the term "comprising" as an open transition word without precluding any additional or other elements.

The aforementioned systems have been described with respect to interaction between several components. It can be appreciated that such systems and components can include those components or specified sub-components, some of the specified components or sub-components, and/or additional components, and according to various permutations and combinations of the foregoing. Sub-components can also be implemented as components communicatively coupled to other components rather than included within parent components (hierarchical). Additionally, it should be noted that one or more components may be combined into a single component providing aggregate functionality or divided into several separate sub-components, and that any one or more middle layers, such as a management layer, may be provided to communicatively couple to such sub-components in order to provide integrated functionality. Any components described herein may also interact with one or more other components not specifically described herein but generally known by those of skill in the art.

What has been described above includes various exemplary aspects. Appendices A and B are documents associated with various aspects of the subject innovation, and such appendices are to be considered part of the subject specification. It is, of course, not possible to describe every conceivable combination of components or methodologies for purposes of describing these aspects, but one of ordinary skill in the art may recognize that many further combinations and permutations are possible. In particular regard to the various functions performed by the above described components (assemblies, devices, circuits, systems, etc.), the terms (including a reference to a "means") used to describe such components are intended to correspond, unless otherwise indicated, to any component which performs the specified function of the described component (*e*.*g*., that is functionally equivalent), even though not structurally equivalent to the disclosed structure, which performs the function in the herein illustrated exemplary aspects of the innovation. In this regard, it will also be recognized that the innovation includes a system as well as a computer-readable medium having computer-executable instructions for performing the acts and/or events of the various methods of the innovation. Furthermore, to the extent that the term "includes" is used in either the detailed description or the claims, such term is intended to be inclusive in a manner similar to the term "comprising" as "comprising" is interpreted when employed as a transitional word in a claim.

The subject matter as described above includes various exemplary aspects. However, it should be appreciated that it is not possible to describe every conceivable component or methodology for purposes of describing these aspects. One of ordinary skill in the art may recognize that further combinations or permutations may be possible. Various methodologies or architectures may be employed to implement the subject invention, modifications, variations, or equivalents thereof. Accordingly, all such implementations of the aspects described herein are intended to embrace the scope and spirit of subject claims. Furthermore, to the extent that the term "includes" is used in either the detailed description or the claims, such term is intended to be inclusive in a manner similar to the term "comprising" as "comprising" is interpreted when employed as a transitional word in a claim.

**The following is a list of further preferred embodiments of the invention:**
Embodiment 1: A computer implemented system encoded with a computer program for design analysis of an industrial automation system, comprising:
   a parsing component that determines loss constituents for a servo motor driven system; and
   an analysis engine that evaluates energy consumption of the servo motor driven system based on the loss constituents.
Embodiment 2: The computer implemented system of claim 1, the loss constituents include:
   loss caused by standard mechanisms, or loss generated from transmission operation, or loss caused from performance of a gear box, or loss generated from operation of servo motors, or a combination thereof.
Embodiment 3: The computer implemented system of claim 1, further comprising a component to rank and select system components based on system throughput or energy consumed.
Embodiment 4: The computer implemented system of claim 1, further comprising a motion profile component to determine velocity profiles in a system.
Embodiment 5: The computer implemented system of claim 1, further comprising a configuration component that generates alternative system configurations based on energy usage or throughput.
Embodiment 6: The computer implemented system of claim 1, the parsing component processes mechatronic components across a system configuration.
Embodiment 7: The computer implemented system of claim 6, the parsing component process the mechatronic components in a local or a remote network environment.
Embodiment 8: The computer implemented system of claim 1, further comprising a database component that stores system components, production information, and models.
Embodiment 9: The computer implemented system of claim 8, the database includes modeled or empirically derived energy or velocity parameters for the system components and models.
Embodiment 10: The computer implemented system of claim 1, further comprising an interface component to rank critical segments of a mechatronic system.
Embodiment 11: The computer implemented system of claim 1, further comprising a motion analyzer component to process models of component velocity or energy efficiency.
Embodiment 12: The computer implemented system of claim 1, further comprising an interface component to list a ranking of alternative system configurations.
Embodiment 13: A method of designing a servo motor driven system, comprising:
   separating a loss of the servo motor driven system to loss constituents based on a predetermined criteria; and
   displaying the loss constituents to a designer of the servo motor driven system.
Embodiment 14: The method of claim 13, further comprising ranking the loss constituents based on a magnitude of an energy consumption or velocity profile.
Embodiment 15: The method of claim 13, further comprising generating a motion profile to determine velocity profiles in a system.
Embodiment 16: The method of claim 13, further comprising generating alternative system configurations based on energy usage or throughput.
Embodiment 17: The method of claim 13, further comprising ranking critical segments of a mechatronic system.
Embodiment 18: The method of claim 13, further comprising processing models of component velocity or energy efficiency across a mechatronic system.
Embodiment 19: The method of claim 13, further comprising processing system components, production information, empirically derived energy or velocity parameters across a mechatronic design specification.
Embodiment 20: A computer implemented system encoded with a computer program for design analysis of an industrial automation system, comprising:
   means for breaking up a loss of a servo motor driven system to loss constituents based on a predetermined criteria; and
   means for ranking the loss constituents for a designer of the system.

## Claims

1. A computer implemented system encoded with a computer program for design analysis of an industrial automation system, comprising:
a parsing component that determines loss constituents for a servo motor driven system; and
an analysis engine that evaluates energy consumption of the servo motor driven system based on the loss constituents.

2. The computer implemented system of claim 1, the loss constituents include:
loss caused by standard mechanisms, or loss generated from transmission operation, or loss caused from performance of a gear box, or loss generated from operation of servo motors, or a combination thereof.

3. The computer implemented system of claim 1, further comprising a component to rank and select system components based on system throughput or energy consumed.

4. The computer implemented system of claim 1, further comprising a motion profile component to determine velocity profiles in a system.

5. The computer implemented system of claim 1, further comprising a configuration component that generates alternative system configurations based on energy usage or throughput.

6. The computer implemented system of claim 1, the parsing component processes mechatronic components across a system configuration.

7. The computer implemented system of claim 6, the parsing component process the mechatronic components in a local or a remote network environment.

8. The computer implemented system of claim 1, further comprising a database component that stores system components, production information, and models.

9. The computer implemented system of claim 8, the database includes modeled or empirically derived energy or velocity parameters for the system components and models.

10. The computer implemented system of claim 1, further comprising an interface component to rank critical segments of a mechatronic system; or
further comprising a motion analyzer component to process models of component velocity or energy efficiency, or
further comprising an interface component to list a ranking of alternative system configurations.

11. A method of designing a servo motor driven system, comprising:
separating a loss of the servo motor driven system to loss constituents based on a predetermined criteria; and
displaying the loss constituents to a designer of the servo motor driven system.

12. The method of claim 11, further comprising ranking the loss constituents based on a magnitude of an energy consumption or velocity profile.

13. The method of claim 11, further comprising generating a motion profile to determine velocity profiles in a system, or
further comprising generating alternative system configurations based on energy usage or throughput, or
further comprising ranking critical segments of a mechatronic system, or
further comprising processing models of component velocity or energy efficiency across a mechatronic system.

14. The method of claim 11, further comprising processing system components, production information, empirically derived energy or velocity parameters across a mechatronic design specification.

15. A computer implemented system encoded with a computer program for design analysis of an industrial automation system, comprising:
means for breaking up a loss of a servo motor driven system to loss constituents based on a predetermined criteria; and
means for ranking the loss constituents for a designer of the system.
